# EUROPEAN PATENT APPLICATION

(11) **EP 4 609 726 A1**
(43) Date of publication of application: **03.09.2025**
(21) Application number: 23882748.9
(22) Date of filing: 27.10.2023
(51) Int. Cl.: A23L 27/00, A23D 9/00, A23D 9/007, A23D 9/02

(54) **FLAVOR-IMPARTING AGENT AND METHOD FOR MANUFACTURING SAME**

(30) Priority: 27.10.2022 JP 2022172523
(71) Applicant: THE NISSHIN OILLIO GROUP, LTD., Tokyo 104-8285 (JP)
(72) Inventor: SEKIGUCHI Yoshinori, Yokohama-shi, Kanagawa 235-8558 (JP); ISAKA Daisuke, Yokohama-shi, Kanagawa 235-8558 (JP); AOYAGI Kanji, Yokohama-shi, Kanagawa 235-8558 (JP)
(74) Representative: Hasegawa, Kan
(86) International application number: PCT/JP2023/038858
(87) International publication number: WO 2024/090546

(57) **Abstract**

The present invention addresses the problem of providing a flavor-imparting agent which increases the amount of lactones produced by oxidation and provides a sweet aroma and/or a milky aroma. Specifically, the present invention provides a method for manufacturing a flavor-imparting agent comprising 5 mass ppm or more of lactones with a carbon number of 6-14, the method comprising: an oxidation/heating step in which an oil/fat is subjected to an oxidation and heating at 140°C or more to produce lactones with a carbon number of 6-14; and, following the aforementioned step, a heating step in which the oil/fat that underwent the oxidation and heating step is heat processed at 140°C. With respect to the conditions of the heating step, the amount of oxygen supplied is less than the amount of oxygen supplied in the oxidation/heating step. 4-100 mass% of the constituent fatty acids of the oil/fat is straight-chain saturated fatty acids with a carbon number of 6-14. The lactones are γ-lactones and/or δ-lactones.

## Description

### Technical Field

The present invention relates to a flavor-imparting agent and a method for producing the same.

### Background Art

Oils and/or fats (lipids) are not only one of the three major nutrients, but also important ingredients that impart deliciousness to food. Oils and/or fats make the taste of food mild and give it richness. Examples of foods that become delicious due to oils and/or fats include tempura, fried foods, ramen noodles, pies, chocolate, cream, and cheese. There are various oils and/or fats, ranging from nearly tasteless and odorless oils and/or fats such as salad oil to oils and/or fats whose unique flavors are prized, such as roasted sesame oil and butter. These oils and/or fats are used according to their applications.

Further, as a method for enhancing the flavor of oils and/or fats, particularly the base rich taste, a method is known in which a specific amount of specific coconut oil is included in the oil and/or fat (Patent Literature 1). Patent Literature 1 specifically discloses an oil and/or fat containing 0.001 to 15% by mass of virgin coconut oil. A sweetness enhancer is also known whose active ingredient is oxidized oil and/or fat obtained by oxidizing oil and/or fat containing coconut oil (Patent Literature 2).

### Citation List

### Patent Literatures

Patent Literature 1: Japanese Unexamined Patent Application Publication No. 2017-213004
Patent Literature 2: Japanese Unexamined Patent Application Publication No. 2022-151720

### Summary of Invention

However, in oxidized oils and/or fats such as those in Patent Literature 1 and Patent Literature 2, while it can be expected that a large amount of lactone, which are aroma components, will be generated by supplying oxygen and promoting oxidation, there is also the problem of simultaneous deterioration of the oils and/or fats. Therefore, a production method that generates lactone more efficiently is required.

An object of the present invention is to provide a flavor-imparting agent that increases the amount of lactone generated by oxidation and exhibits a sweet aroma and/or a milky aroma.

As a result of intensive studies to achieve the above object, the present inventors have found that by subjecting specific oils and/or fats to oxidative heat treatment, and further, by heat-treating the oils and/or fats subjected to the oxidative heat treatment at a specific temperature in a state where oxygen is not supplied or in an oxygen-free state, the amount of lactone can be increased, thereby completing the present invention.

That is, the present invention provides the following [1] to [8].
[1] A method for producing a flavor-imparting agent containing 5 mass ppm or more of lactone having 6 to 14 carbon atoms, comprising
   an oxidative heating step of oxidatively heat-treating oil and/or fat at 140°C or higher to generate lactone having 6 to 14 carbon atoms; and
   a heating step of heat-treating the oil and/or fat that has undergone the oxidative heating step at 80°C or higher, wherein
   in conditions of the heating step, an oxygen supply amount is smaller than an oxygen supply amount in the oxidative heating step,
   4 to 100% by mass of constituent fatty acids of the oil and/or fat are linear saturated fatty acids having 6 to 14 carbon atoms, and
   the lactone is γ-lactone and/or δ-lactone.
[2] The method for producing a flavor-imparting agent according to [1], wherein the heating in the heating step is performed without supplying oxygen or in an oxygen-free state.
[3] The method for producing a flavor-imparting agent according to [1] or [2], wherein 0 to 60% by mass of the constituent fatty acids of the oil and/or fat are linear unsaturated fatty acids.
[4] The method for producing a flavor-imparting agent according to [1] or [2], wherein the flavor-imparting agent contains 50% by mass or more of triglycerides.
[5] The method for producing a flavor-imparting agent according to [1] or [2], wherein the flavor-imparting agent contains 130 mass ppm or less of linear alkanes having 7 to 8 carbon atoms and/or linear alkanes having 9 carbon atoms.
[6] The method for producing a flavor-imparting agent according to [5], wherein after the heating step, subsequently, a distillation step, or a mixing step, or a distillation step and a mixing step, or a mixing step and a distillation step as follows is performed such that the linear alkanes having 7 to 8 carbon atoms and/or the linear alkanes having 9 carbon atoms in the flavor-imparting agent are 130 mass ppm or less.
   Distillation step: a step of distilling under conditions where the linear alkanes having 7 to 8 carbon atoms and/or the linear alkanes having 9 carbon atoms in the oil and/or fat are reduced, but the lactone having 6 to 14 carbon atoms in the oil and/or fat remain at 5 mass ppm or more.
   Mixing step: a step of mixing the oil and/or fat after the oxidative heating step or the oil and/or fat after the distillation step with an oil and/or fat having a smaller amount of linear alkanes having 7 to 8 carbon atoms and/or linear alkanes having 9 carbon atoms.
[7] The method for producing a flavor-imparting agent according to [6], wherein the distillation in the distillation step is performed at 200°C or lower, 200 Pa or higher, and within 60 minutes.
[8] The method for producing a flavor-imparting agent according to [6], wherein the mixing step in the mixing step includes mixing an oil and/or fat that has not undergone an oxidative heating step with the oil and/or fat after the oxidative heating step or the distillation step, which contains 130 mass ppm or more of linear alkanes having 7 to 8 carbon atoms and/or linear alkanes having 9 carbon atoms in the oil and/or fat.

Further, the present invention may also be in the following embodiments.
[1] A method for producing a flavor-imparting agent containing 5 mass ppm or more of lactone having 6 to 14 carbon atoms, comprising
   an oxidative heating step of oxidatively heat-treating a raw material oil and/or fat at 140°C or higher to generate lactone-containing oil and/or fat containing lactone having 6 to 14 carbon atoms; and
   a heating step of heat-treating the lactone-containing oil and/or fat obtained in the oxidative heating step at 80°C or higher, wherein
   in conditions of the heating step, an oxygen supply amount is smaller than an oxygen supply amount in the oxidative heating step,
   4 to 100% by mass of constituent fatty acids of the raw material oil and/or fat are linear saturated fatty acids having 6 to 14 carbon atoms, and
   the lactone is γ-lactone and/or δ-lactone.
[2] The method for producing a flavor-imparting agent according to [1], wherein the heating step is performed without supplying oxygen or in an oxygen-free state.
[3] The method for producing a flavor-imparting agent according to [1] or [2], wherein the raw material oil and/or fat is an oil and/or fat having a content of linear unsaturated fatty acids of 0 to 60% by mass in the constituent fatty acids of the oil and/or fat.
[4] The method for producing a flavor-imparting agent according to any one of [1] to [3], wherein the flavor-imparting agent contains 50% by mass or more of triglycerides.
[5] The method for producing a flavor-imparting agent according to any one of [1] to [4], wherein the flavor-imparting agent contains 130 mass ppm or less of linear alkanes having 9 carbon atoms.
[6] The method for producing a flavor-imparting agent according to any one of [1] to [4], wherein the flavor-imparting agent contains 130 mass ppm or less of linear alkanes having 7 to 9 carbon atoms.
[7] The method for producing a flavor-imparting agent according to any one of [1] to [6], wherein after the heating step, a distillation step, or a mixing step, or a distillation step and a subsequent mixing step, or a mixing step and a subsequent distillation step is performed such that the linear alkanes having 7 to 9 carbon atoms in the flavor-imparting agent are 130 mass ppm or less. Distillation step: a step of distilling under conditions where the linear alkanes having 7 to 9 carbon atoms in the oil and/or fat are reduced, but the lactone having 6 to 14 carbon atoms in the oil and/or fat remain at 5 mass ppm or more.
   Mixing step: a step of mixing the oil and/or fat after the heating step or the oil and/or fat after the distillation step with an oil and/or fat having a smaller amount of linear alkanes having 7 to 9 carbon atoms.
[8] The method for producing a flavor-imparting agent according to [7], wherein the distillation in the distillation step is performed at 200°C or lower, 200 Pa or higher, and within 60 minutes.
[9] The method for producing a flavor-imparting agent according to [7] or [8], wherein the mixing in the mixing step includes mixing the oil and/or fat after the heating step or the distillation step with an oil and/or fat that has not undergone an oxidative heating step.
[10] A flavor-imparting agent for imparting flavor to oil and/or fat, comprising
   5 mass ppm or more of lactone having 6 to 14 carbon atoms and 130 mass ppm or less of linear alkanes having 9 carbon atoms, wherein
   the lactone having 6 to 14 carbon atoms is γ-lactone and/or δ-lactone, and
   the oil and/or fat is an oil and/or fat having a content of linear saturated fatty acids having 6 to 14 carbon atoms of 4 to 100% by mass in constituent fatty acids of the oil and/or fat.
[11] The flavor-imparting agent according to [10], further comprising 50% by mass or more of triglycerides.
[12] The method for producing a flavor-imparting agent according to [10] or [11], wherein the flavor-imparting agent contains 130 mass ppm or less of linear alkanes having 7 to 9 carbon atoms. Advantageous Effects of Invention

According to the present invention, it is possible to provide a flavor-imparting agent that improves the flavor of oils and/or fats, particularly, a flavor-imparting agent having a sweet aroma and/or a milky aroma exhibited by lactone having 6 to 14 carbon atoms. Further, by performing a step of adjusting the linear alkanes having 7 to 9 carbon atoms in the flavor-imparting agent to 130 mass ppm or less, it is possible to provide a flavor-imparting agent with improved rancid odor.

### Description of Embodiments

Hereinafter, the present invention will be described in detail with examples. Note that in the embodiments of the present invention, A (numerical value) to B (numerical value) means A or more and B or less. Further, the preferred embodiments, more preferred embodiments, and other embodiments exemplified below can be used in appropriate combinations regardless of expressions such as "preferred" and "more preferred." In addition, the description of numerical ranges is illustrative, and ranges obtained by appropriately combining the upper and lower limits of each range and the numerical values of the examples can also be preferably used. Moreover, terms such as "containing" or "including" may be replaced with "consisting essentially of" or "consisting of."

The method for producing a flavor-imparting agent of the present invention is a method for producing a flavor-imparting agent containing 5 mass ppm or more of lactone having 6 to 14 carbon atoms, comprising an oxidative heating step of oxidatively heat-treating oil and/or fat at 140°C or higher to generate lactone having 6 to 14 carbon atoms, and a heating step of heat-treating the oil and/or fat that has undergone the oxidative heating step at 80°C or higher, wherein in conditions of the heating step, an oxygen supply amount is smaller than an oxygen supply amount in the oxidative heating step, 4 to 100% by mass of constituent fatty acids of the oil and/or fat are linear saturated fatty acids having 6 to 14 carbon atoms, and the lactone is γ-lactone and/or δ-lactone. Hereinafter, it will be explained in detail.

### [Oxidative Heating Step]

The method for producing a flavor-imparting agent of the present invention includes an oxidative heating step of oxidatively heat-treating oil and/or fat at 140°C or higher to generate lactone having 6 to 14 carbon atoms.

### (Raw Material Oil and/or Fat to be Oxidatively Heat-Treated)

The raw material oil and/or fat to be oxidatively heat-treated can be an oil and/or fat in which the content of linear saturated fatty acids having 6 to 14 carbon atoms (percentage to the total mass of constituent fatty acids in the oil and/or fat) in the constituent fatty acids of the oil and/or fat is 4 to 100% by mass. Lactone having 6 to 14 carbon atoms is components generated by oxidizing a part of the linear saturated fatty acids having the corresponding number of carbon atoms; therefore, the flavor-imparting agent of the present invention inevitably contains linear saturated fatty acids having 6 to 14 carbon atoms. The linear saturated fatty acids having 6 to 14 carbon atoms may be one type or two or more types. Examples of the linear saturated fatty acids having 6 to 14 carbon atoms include caproic acid, caprylic acid, capric acid, lauric acid, and myristic acid; preferably, caprylic acid and/or capric acid, or lauric acid and/or myristic acid. More preferable is one or more selected from caprylic acid, capric acid, and lauric acid.

The raw material oil and/or fat to be oxidatively heat-treated is preferably such that the content of linear saturated fatty acids having 6 to 14 carbon atoms in the constituent fatty acids of the oil and/or fat is 4% by mass or more, because a sufficient amount of lactone having 6 to 14 carbon atoms can be generated. Further, if the content of the linear saturated fatty acids having 6 to 14 carbon atoms is 100% by mass or less, or 80% by mass or less, the choices of oils and/or fats that can be used in the present invention increase, which is preferable. The content of linear saturated fatty acids having 6 to 14 carbon atoms in the constituent fatty acids of the oil and/or fat is preferably 10 to 100% by mass, more preferably 30 to 100% by mass, further preferably 50 to 100% by mass, and most preferably 70 to 100% by mass.

In particular, lactones having 6 to 10 carbon atoms generated from linear saturated fatty acids having 6 to 10 carbon atoms have a "sweet aroma," and lactones having 12 to 14 carbon atoms generated from linear saturated fatty acids having 12 to 14 carbon atoms have a "milky aroma." Therefore, in order to enhance the "milky aroma," in the linear saturated fatty acids having 6 to 14 carbon atoms, it is preferable that 1/2 or more (mass percentage) are linear saturated fatty acids having 12 to 14 carbon atoms, more preferably 2/3 or more (mass percentage) are linear saturated fatty acids having 12 to 14 carbon atoms, and further preferably 4/5 or more (mass percentage) are linear saturated fatty acids having 12 to 14 carbon atoms. In order to enhance the "sweet aroma," in the linear saturated fatty acids having 6 to 14 carbon atoms, it is preferable that 1/2 or more (mass percentage) are linear saturated fatty acids having 6 to 10 carbon atoms, more preferably 2/3 or more (mass percentage) are linear saturated fatty acids having 6 to 10 carbon atoms, and further preferably 4/5 or more (mass percentage) are linear saturated fatty acids having 6 to 10 carbon atoms.

Note that in the present invention, the constituent fatty acids in the oil and/or fat are fatty acids constituting glycerides (fatty acids bonded to glycerin) or free fatty acids. Since the amount of lactone generated is very small compared to the amount of constituent fatty acids in the oil and/or fat, the amount of oil and/or fat and the percentage (mass ratio) of constituent fatty acids are hardly affected by the generation from fatty acids to lactones. Therefore, in the method for producing a flavor-imparting agent, the amount of oil and/or fat and the mass ratio of constituent fatty acids are substantially the same before and after the oxidative heat treatment.

The raw material oil and/or fat to be oxidatively heat-treated preferably has a content of linear unsaturated fatty acids in the constituent fatty acids of the oil and/or fat of 0 to 60% by mass. In the method for producing a flavor-imparting agent described later, in the oxidative heating step, linear unsaturated fatty acids generate more rancid odor than linear saturated fatty acids; therefore, it is preferable that the oil and/or fat used in the oxidative heating step has less linear unsaturated fatty acids. The oil and/or fat more preferably has a content of linear unsaturated fatty acids in the constituent fatty acids of the oil and/or fat of 0 to 50% by mass, further preferably 0 to 30% by mass or 0 to 20% by mass, particularly preferably 0 to 10% by mass, and most preferably 0 to 5% by mass. On the other hand, the oil and/or fat mixed with the oxidatively heated oil and/or fat in the mixing step may have a high content of linear unsaturated fatty acids in the constituent fatty acids. The linear unsaturated fatty acids are preferably fatty acids having 16 to 24 carbon atoms, and examples thereof include palmitoleic acid, oleic acid, linoleic acid, linolenic acid, and erucic acid.

The raw material oil and/or fat to be oxidatively heat-treated can further contain linear saturated fatty acids having 16 to 24 carbon atoms as constituent fatty acids in the oil and/or fat. Examples of these fatty acids include palmitic acid, stearic acid, and behenic acid. These fatty acids are preferably present in an amount of 0 to 50% by mass, more preferably 1 to 30% by mass, and further preferably 10 to 30% by mass, relative to the total amount of constituent fatty acids in the oil and/or fat.

The oil and/or fat may contain one or more of monoglycerides, diglycerides, triglycerides, and fatty acids. The flavor-imparting agent of the present invention preferably contains 50% by mass or more, 60% by mass or more, 70% by mass or more, or 80% by mass or more of triglycerides in the flavor-imparting agent, and further preferably 90% by mass or more or 95% by mass or more. It is also preferable that 80% by mass or more of the glycerides are triglycerides, more preferable that 90% by mass or more of the glycerides are triglycerides, further preferable that 95 to 100% by mass of the glycerides are triglycerides, and most preferable that 98 to 100% by mass of the glycerides are triglycerides. These oils and/or fats can be obtained by esterification reaction of fatty acids and glycerin, interesterification reaction of fatty acid esters and glycerin, interesterification reaction of fatty acids and oils and/or fats or the like, or interesterification reaction of methyl or ethyl esters of fatty acids and glycerin or oils and/or fats. Coconut oil and palm kernel oil can also be used. When unsaturated fatty acids are contained, the unsaturated bonds may be reduced by hydrogenating fatty acids, methyl or ethyl esters of fatty acids, or glycerides. As the oil and/or fat, optionally hydrogenated hardened oil of lauric oils and/or fats is preferable, and it is particularly preferable to use optionally hydrogenated coconut oil or palm kernel oil. As the oil and/or fat, fully hydrogenated oil of lauric oils and/or fats such as coconut oil and palm kernel oil is most preferable. Note that within the range where 4% by mass or more of the constituent fatty acids of the raw material oil and/or fat are linear saturated fatty acids having 6 to 14 carbon atoms, one may mix other oils and/or fats, such as coconut oil, palm kernel oil, palm oil, palm fractionated oil (palm olein, palm super olein, palm mid-fraction, palm stearin, etc.), shea butter, shea fractionated oil, Sal fat, Sal fractionated oil, illipe butter, soybean oil, rapeseed oil, cottonseed oil, safflower oil, sunflower oil, rice oil, corn oil, sesame oil, olive oil, perilla oil, linseed oil, peanut oil, milk fat, cocoa butter, and other animal and vegetable oils and/or fats, mixed oils thereof, processed oils and/or fats, etc.

### (Oxidative Heat Treatment Conditions)

It is necessary to heat the oil and/or fat in the presence of oxygen for oxidative heat treatment. Even with the amount of oxygen dissolved in the oil and/or fat, some generation of lactone can be expected, but it is preferable to heat the oil and/or fat under atmospheric pressure, or to heat it while supplying oxygen (or air) into the oil and/or fat. When supplying oxygen, the internal pressure of the apparatus is suitably 0.1 to 10 MPa, preferably 0.5 to 5 MPa, and more preferably 0.8 to 3 MPa in gauge pressure.

Oxidative heating is performed by heating the raw material oil and/or fat, and the temperature may be any temperature at which lactone having 6 to 14 carbon atoms is generated, for example, 140°C or higher, preferably 150°C to 250°C, more preferably 160°C to 225°C, and further preferably 170°C to 200°C. The heating time depends on the heating temperature, but may be any time sufficient to oxidize the raw material oil and/or fat and generate lactones. For example, when the heating temperature is 180°C or higher, the raw material oil and/or fat may be heated for 5 minutes or more, preferably 10 to 120 minutes, or 20 to 90 minutes, or 45 to 75 minutes, after the raw material oil and/or fat reaches 180°C to 200°C. When the heating temperature is 160 to 180°C, the raw material oil and/or fat may be heated for 10 minutes or more, preferably 15 to 160 minutes, or 30 to 120 minutes, after the raw material oil and/or fat reaches 160°C. When the heating temperature is 140 to 160°C, the raw material oil and/or fat may be heated for 15 minutes or more, preferably 90 to 180 minutes, or 90 to 160 minutes, after the raw material oil and/or fat reaches 140°C. The heating conditions are not particularly limited as long as the raw material oil and/or fat can be oxidized to generate lactones, and preferably, the raw material oil and/or fat may be heated in the presence of oxygen, for example, under atmospheric pressure.

The oxidative heat treatment step generates lactone-containing oil and/or fat containing lactone having 6 to 14 carbon atoms. Here, the definition of "oil and/or fat" of the lactone-containing oil and/or fat is applicable to the definition of the raw material oil and/or fat, except that it contains lactone having 6 to 14 carbon atoms.

In the lactone-containing oil and/or fat, the larger the amount of lactone having 6 to 14 carbon atoms generated by the oxidative heating step, the stronger the "sweet aroma" and "milky aroma," which is preferable. The lactone-containing oil and/or fat after the oxidative heating step is preferably oxidatively heated under conditions such that the content of lactone having 6 to 14 carbon atoms in the oil and/or fat is, for example, 5 mass ppm or more, preferably 15 mass ppm or more, or 60 mass ppm or more, or 100 mass ppm or more, or 500 mass ppm or more, or 1000 mass ppm or more, or 2000 mass ppm or more, or 3000 mass ppm or 5000 mass ppm or more. Note that the content of lactone having 6 to 14 carbon atoms in the oil and/or fat of the lactone-containing oil and/or fat after the oxidative heating step may be, for example, 7000 mass ppm or less, or 5000 mass ppm or less, or 4000 mass ppm or less, or 2000 mass ppm or less.

In the oxidative heating step, when the generation of lactone having 6 to 14 carbon atoms increases, the generation of linear alkanes, which are other oxidative decomposition products, also increases. Linear alkanes having 9 carbon atoms correlate with rancid odor, and the rancid odor components are considered to have boiling points equal to or lower than that of linear alkanes having 9 carbon atoms. Therefore, if there are many linear alkanes having 7 to 9 carbon atoms, which have boiling points equal to or lower than the boiling point of linear alkanes having 9 carbon atoms, the possibility of generating rancid odor increases, so that the amount of the linear alkanes having 7 to 9 carbon atoms or the linear alkanes having 9 carbon atoms will be appropriately reduced in the distillation step or mixing step described later. Therefore, the lactone-containing oil and/or fat after the oxidative heating step suitably has a content of linear alkanes having 7 to 9 carbon atoms in the oil and/or fat of more than 130 ppm, or 150 ppm or more, or 200 ppm or more. In particular, although the presence of linear alkanes having 9 carbon atoms in an amount exceeding, for example, 130 mass ppm, causes rancid odor, it enables an increase in the amount of lactone having 6 to 14 carbon atoms, so that the oil and/or fat after the oxidative heating step more suitably has a content of linear alkanes having 9 carbon atoms in the oil and/or fat of more than 130 ppm, 150 ppm or more, or 200 ppm or more. For this reason, it is preferable to perform the oxidative heating step under conditions that result in such a content of linear alkanes having 7 to 9 carbon atoms or linear alkanes having 9 carbon atoms. Note that the content of linear alkanes having 7 to 9 carbon atoms or linear alkanes having 9 carbon atoms in the oil and/or fat of the lactone-containing oil and/or fat after the oxidative heating step is preferably reduced to 130 mass ppm or less, 100 mass ppm or less, 50 ppm or less, or 20 mass ppm or less by the distillation step or the mixing step.

The lactone-containing oil and/or fat obtained through the oxidative heating step is oxidized and preferably has a peroxide value of 7.5 or more. The lactone-containing oil and/or fat obtained through the oxidative heating step more preferably has a peroxide value of 10 to 100, or 15 to 90, or 20 to 80, or 25 to 70, or 30 to 60. A peroxide value of 7.5 or more of the oil and/or fat confirms that the oil and/or fat has undergone oxidation to a certain level or more. The peroxide value can be measured according to Standard Methods for the Analysis of Fats, Oils and Related Materials (edited by the Japan Oil Chemists' Society) 2.5.2.1-2013 "Peroxide Value (Acetic Acid-Isooctane Method)."

### [Heating Step]

The method for producing a flavor-imparting agent of the present invention includes a heating step of heat-treating the lactone-containing oil and/or fat obtained through the oxidative heating step at 80°C or higher. In the conditions of the heating step, it is necessary that the oxygen supply amount be smaller than the oxygen supply amount in the oxidative heating step. "Small oxygen supply amount" means that the oxygen amount (volume %) in the heating step is 95% or less, 80% or less, 60% or less, 50% or less, 30% or less, or 20% or less, relative to the oxygen amount (100 volume %) in the oxidative heating step; preferably, it is suitable that oxygen is substantially absent in the heating step. It is considered that by reducing the oxygen supply amount, the oxides generated in the oxidative heating step are decomposed without being further oxidized, thereby generating more lactones. The oxides may be decomposed by applying a certain degree of heat, and heating at 80°C is sufficient heating to generate lactones.

The heating step is preferably performed without supplying oxygen or in an oxygen-free state. For example, in the oxidative heating step, the supply of oxygen may be stopped and heating may be continued as is, so that the oxidative heating step and the heating step can be performed continuously. After performing the oxidative heating step, the headspace in the reaction vessel may be replaced with an inert gas such as nitrogen, carbon dioxide, or a rare gas. Alternatively, a method such as blowing an inert gas into the oil and/or fat can be used.

The heating step is performed by heating the lactone-containing oil and/or fat obtained through the oxidative heating step, and the temperature may be any temperature at which lactone having 6 to 14 carbon atoms is generated, such as 80°C or higher, or 140°C or higher, preferably 110°C to 250°C, or 140°C to 240°C, or 150°C to 250°C, more preferably 160°C to 225°C, or 160°C to 220°C, and further preferably 170°C to 200°C. The heating time depends on the heating temperature, but it may be any time sufficient to oxidize the raw material oil and/or fat and generate lactone. For example, when the heating temperature is 180°C or higher, the raw material oil and/or fat may be heated for 5 minutes or more, preferably 10 to 120 minutes, or 20 to 90 minutes, or 45 to 75 minutes. When the heating temperature is 160°C to 180°C, the raw material oil and/or fat may be heated for 10 minutes or more, preferably 15 to 160 minutes, or 30 to 120 minutes. When the heating temperature is 140°C to 160°C, the raw material oil and/or fat may be heated for 15 minutes or more, preferably 90 to 180 minutes, or 90 to 160 minutes. When the heating temperature is 80°C to 140°C, the raw material oil and/or fat may be heated for 20 minutes or more, preferably 90 to 240 minutes, or 90 to 180 minutes.

### [Distillation Step]

The linear alkanes having 7 to 9 carbon atoms generated in the oxidative heating step can be reduced by subsequently performing a distillation step, or a mixing step, or a distillation step and a mixing step, or a mixing step and a distillation step after the heating step. By adjusting the linear alkanes having 7 to 9 carbon atoms and/or linear alkanes having 9 carbon atoms in the flavor-imparting agent to 130 mass ppm or less, rancid odor can be suppressed.

The distillation step is suitably performed under conditions where alkanes having 7 to 9 carbon atoms or alkanes having 9 carbon atoms in the oil and/or fat are reduced but lactone having 6 to 14 carbon atoms remain in the oil and/or fat at 5 mass ppm or more.

In the distillation step, methods such as ordinary distillation, vacuum distillation, steam distillation, and vacuum steam distillation can be used as appropriate. Vacuum distillation or vacuum steam distillation is preferable because distillation can be performed at low temperatures. In order to leave lactone having 6 to 14 carbon atoms and remove linear alkanes having 7 to 9 carbon atoms, vacuum steam distillation is preferably performed under milder conditions than general deodorization conditions for oils and/or fats. For example, the distillation in the distillation step is suitably performed under conditions of a distillation temperature of 200°C or lower, a pressure of 200 Pa or higher, and a distillation time within 60 minutes, or under conditions of a distillation temperature of 120 to 210°C, a pressure of 200 to 10000 Pa, and a distillation time of 5 to 120 minutes.

Preferably, distillation can be performed at a distillation temperature of 120 to 170°C, a pressure of 200 to 400 Pa, and a distillation time of 20 to 100 minutes.

Preferably, distillation can be performed at a distillation temperature of 160 to 200°C, a pressure of 1000 to 8000 Pa, and a distillation time of 20 to 100 minutes.

Preferably, distillation can be performed at a distillation temperature of 170 to 210°C, a pressure of 1200 to 9500 Pa, and a distillation time of 20 to 100 minutes.

Preferably, distillation can be performed at a distillation temperature of 160 to 200°C, a pressure of 200 to 1000 Pa, and a distillation time of 5 to 90 minutes.

Preferably, distillation can be performed at a distillation temperature of 170 to 210°C, a pressure of 200 to 1200 Pa, and a distillation time of 5 to 60 minutes.

More preferably, distillation can be performed at a distillation temperature of 140 to 160°C, a pressure of 200 to 2000 Pa, and a distillation time of 40 to 90 minutes.

More preferably, distillation can be performed at a distillation temperature of 150 to 170°C, a pressure of 400 to 3000 Pa, and a distillation time of 40 to 90 minutes.

More preferably, distillation can be performed at a distillation temperature of 160 to 180°C, a pressure of 1000 to 4000 Pa, and a distillation time of 40 to 90 minutes.

More preferably, distillation can be performed at a distillation temperature of 170 to 190°C, a pressure of 1200 to 6000 Pa, and a distillation time of 40 to 90 minutes.

More preferably, distillation can be performed at a distillation temperature of 180 to 200°C, a pressure of 2000 to 8000 Pa, and a distillation time of 40 to 90 minutes.

More preferably, distillation can be performed at a distillation temperature of 190 to 210°C, a pressure of 3000 to 10000 Pa, and a distillation time of 40 to 90 minutes.

Further preferably, distillation can be performed at a distillation temperature of 140 to 160°C, a pressure of 250 to 1500 Pa, and a distillation time of 40 to 80 minutes.
Further preferably, distillation can be performed at a distillation temperature of 150 to 170°C, a pressure of 750 to 2000 Pa, and a distillation time of 40 to 80 minutes.
Further preferably, distillation can be performed at a distillation temperature of 160 to 180°C, a pressure of 1200 to 3000 Pa, and a distillation time of 40 to 80 minutes.
Further preferably, distillation can be performed at a distillation temperature of 170 to 190°C, a pressure of 1200 to 5000 Pa, and a distillation time of 40 to 80 minutes.
Further preferably, distillation can be performed at a distillation temperature of 180 to 200°C, a pressure of 2500 to 7000 Pa, and a distillation time of 40 to 80 minutes.
Further preferably, distillation can be performed at a distillation temperature of 190 to 210°C, a pressure of 4000 to 9500 Pa, and a distillation time of 40 to 80 minutes.

Note that in the case of vacuum steam distillation, in addition to the above distillation temperature, pressure, and distillation time, steam is blown into the flavor-imparting agent, and the amount of steam is preferably 0.1 to 10% by mass, preferably 0.5 to 5% by mass, and more preferably 0.8 to 3% by mass, relative to the flavor-imparting agent.

### [Mixing Step]

The mixing step involves mixing the oil and/or fat after the heating step or the oil and/or fat after the distillation step with an oil and/or fat having a smaller amount of linear alkanes having 7 to 9 carbon atoms. As a result, the amount of linear alkanes having 7 to 9 carbon atoms in the flavor-imparting agent can be reduced.

The oil and/or fat after the heating step contains more than 130 mass ppm of linear alkanes having 7 to 9 carbon atoms or linear alkanes having 9 carbon atoms in the oil and/or fat. The oil and/or fat after the distillation step preferably contains more than 130 mass ppm of linear alkanes having 7 to 9 carbon atoms and/or linear alkanes having 9 carbon atoms in the oil and/or fat; however, even if the content is 130 mass ppm or less, the amount of linear alkanes in the resulting flavor-imparting agent becomes further lower, which is preferable.

Note that if the amount of linear alkanes is not 130 mass ppm or less even after the mixing step, the mixing step or the distillation step described above can be performed again.

### [Flavor-Imparting Agent]

In the present invention, the flavor-imparting agent contains 5 mass ppm or more of lactone having 6 to 14 carbon atoms (γ-lactone and/or δ-lactone). The flavor-imparting agent is for imparting flavor to oils and/or fats, wherein the oil and/or fat is such that the content of linear saturated fatty acids having 6 to 14 carbon atoms in the constituent fatty acids of the oil and/or fat is 4 to 100% by mass. The flavor-imparting agent having this configuration has a sweet aroma and/or a milky aroma and can improve the flavor of oils and/or fats. Here, "sweet aroma" means the aroma generated when sugar or caramel is heated. "Milky aroma" means the smell of cow's milk.

### (Lactones)

The lactone having 6 to 14 carbon atoms in the flavor-imparting agent is generated from fatty acids having the corresponding number of carbon atoms. Lactones having 6 to 10 carbon atoms, which are generated from linear saturated fatty acids having 6 to 10 carbon atoms, have a "sweet aroma," and lactones having 12 to 14 carbon atoms, which are generated from linear saturated fatty acids having 12 to 14 carbon atoms, are said to have a "milky aroma" (here, reference is made to the contents described in unpublished patent applications: Japanese Patent Application No. 2021-76196 and international application: PCT/JP2022/017821, the contents of which are incorporated herein as a part thereof). The content of lactone having 6 to 14 carbon atoms in the flavor-imparting agent is preferably 15 mass ppm or more, 60 mass ppm or more, 100 mass ppm or more, or 500 mass ppm or more, or 1000 mass ppm or more, or 2000 mass ppm or more, or 3000 mass ppm or 5000 mass ppm or more, relative to the total mass of the flavor-imparting agent. The content of lactone having 6 to 14 carbon atoms in the flavor-imparting agent may be, for example, 7000 mass ppm or less, 5000 mass ppm or less, or 4000 mass ppm or less, or 2000 mass ppm or less. When the content of lactone having 6 to 14 carbon atoms is 5 mass ppm or more, the flavor-imparting agent exhibits a sweet aroma and/or a milky aroma.

In the present invention, the lactone content can be measured by gas chromatography-mass spectrometry.

### (Linear Alkanes)

In the flavor-imparting agent, the content of linear alkanes having 7 to 9 carbon atoms or linear alkanes having 9 carbon atoms in the flavor-imparting agent is preferably 130 mass ppm or less. Linear alkanes are components generated separately from lactone when lactone is generated. In the oxidative heat treatment, when there are many linear fatty acids having 16 or more carbon atoms, especially unsaturated fatty acids, an undesirable flavor called rancid odor (oxidative deterioration odor) is likely to be generated, and it may also be generated when excessive oxidative heating is performed. It is unclear whether these linear alkanes are components of the rancid odor, and it is considered that other oxidation products are also components of the rancid odor. However, since the amount of linear alkanes having 9 carbon atoms in the oil and/or fat subjected to the oxidative heating step or the oil and/or fat obtained by distilling the same correlates with the degree of rancid odor, it is considered that the amount of linear alkanes having 9 carbon atoms in the flavor-imparting agent correlates with the amount of rancid odor components. At least, under distillation conditions where alkanes having 9 carbon atoms are removed, rancid odor is also reduced, so that it can be said that the boiling point of the rancid odor components is equal to or lower than the boiling point of the alkanes having 9 carbon atoms. Therefore, the content of linear alkanes having 9 carbon atoms in the flavor-imparting agent is preferably 130 mass ppm or less, or 95 mass ppm or less, or 90 mass ppm or less, or 30 mass ppm or less, or 10 mass ppm or less, or 0 mass ppm. Further, by distillation, linear alkanes having 9 or less carbon atoms are removed in the same manner as linear alkanes having 9 carbon atoms because their boiling points are equal to or lower than the boiling point of linear alkanes having 9 carbon atoms. The content of linear alkanes having 7 to 9 carbon atoms in the flavor-imparting agent is preferably 130 mass ppm or less, 95 mass ppm or less, 90 mass ppm or less, 30 mass ppm or less, 10 mass ppm or less, or 0 mass ppm. Note that here, "rancid odor (oxidative deterioration odor)" refers to an unpleasant odor (deterioration odor) generated when oil and/or fat is oxidized and deteriorated.

The flavor-imparting agent may contain linear alkanes generated from linear saturated fatty acids having 16 to 24 carbon atoms. For example, it can contain 5 mass ppm or more, preferably 10 mass ppm or more, of linear alkanes having 17 carbon atoms generated from stearic acid.

In the present invention, the linear alkane content can be measured by gas chromatography-mass spectrometry.

### (Other Components)

The flavor-imparting agent may contain any other components that can be usually added to food, as long as they do not impair the effects of the present invention, particularly the flavor of sweet aroma and/or milky aroma. Examples of other components include emulsifiers, antioxidants, alcohols, water, pH adjusters, seasonings, coloring agents, flavorings, antifoaming agents, sugars, sugar alcohols, and stabilizers. Examples of emulsifiers include polyglycerin fatty acid esters, polyglycerin condensed ricinoleates, sorbitan fatty acid esters, sorbitol fatty acid esters, sucrose fatty acid esters, propylene glycol fatty acid esters, organic acid monoglycerides, polysorbates, and lecithin. Examples of antioxidants include tocopherols, tocotrienols, carotenes, polyphenols, ascorbic acid, and ascorbic acid derivatives.

### [Food]

The flavor-imparting agent of the present invention can be used in food. The flavor-imparting agent can be eaten as is, but by using it in place of oils and/or fats conventionally used in various foods, the sweetness and milky flavor of the food can be enhanced. For example, in addition to being blended as a raw material for food, it can also be used as frying oil, stir-frying oil, release oil, cooking oil, and the like. It may also be used by topping or coating food. Examples of foods to which the flavor-imparting agent can be added include conventionally known foods and drinks as long as they usually contain oils and/or fats, such as ice cream, milk-based frozen dessert (ice cream-like food), cream, whipped cream, chocolate, milk coffee, tea, plant-based milk beverages (such as soy milk and almond milk), tempura, fried foods, ramen noodles, pies, and cheese.

### Examples

Next, the present invention will be described in more detail with reference to Examples, Comparative Examples, and Reference Examples, but the present invention is not limited thereto. In the following, "%" indicates % by mass unless otherwise specified. In the following, "ppm" indicates mass ppm unless otherwise specified.

### <Examples and Comparative Examples>

### [Samples 1-1 to 2, Samples 1-1-1 to 6, and Samples 1-2-1 to 8]

As described below, medium-chain fatty acid triglycerides (Samples 1-1 and 1-2) were subjected to oxidative heating step 1 and heating steps as appropriate to obtain Samples 1-1-1 to 6 and Samples 1-2-1 to 8. The analysis results of each sample are shown in Table 1.

### (Sample 1-1)

Caprylic acid/capric acid glycerides (manufactured by Nisshin Oillio Group, Ltd.: medium-chain fatty acid triglycerides, constituent fatty acids of the oil and/or fat: caprylic acid 75%, capric acid 25%) were used as Sample 1-1.

### (Sample 1-2)

Tricaprylin (manufactured by Nisshin Oillio Group, Ltd.: medium-chain fatty acid triglycerides, constituent fatty acids of the oil and/or fat: caprylic acid 100%) was used as Sample 1-2.

### [Samples 1-1-1 to 6]

50 of a raw material oil and/or fat (Sample 1-1) was heated in a beaker (200 mL) at 180°C for 60 minutes under atmospheric pressure (oxidative heating step 1) to obtain Sample 1-1-1 that had undergone the oxidative heating step. Further, 2.0 g of Sample 1-1-1 was placed in a 10 mL test tube, sealed under a nitrogen atmosphere, and then heated at 200°C for 5 minutes (heating step 1). The heating time, etc., of Samples 1-1-1 to 6 that had undergone the heating step are as shown in Table 1.

### [Samples 1-2-1 to 8]

50 of a raw material oil and/or fat (Sample 1-2) was heated in a beaker (200 mL) at 180°C for 1 hour under atmospheric pressure (oxidative heating step 1) to obtain Sample 1-2-1 that had undergone the oxidative heating step. Further, 2.0 g of Sample 1-2-1 was placed in a 10 mL test tube, sealed under a nitrogen atmosphere, and then heated at 180°C for 5 minutes (heating step 2). The heating time, etc., of the obtained Samples 1-2-1 to 8 are as shown in Table 1.

### [Analysis]

### (Peroxide Value: POV)

The peroxide value (POV) of each sample was measured according to Standard Methods for the Analysis of Fats, Oils and Related Materials (edited by the Japan Oil Chemists' Society) 2.5.2.1-2013 "Peroxide Value (Acetic Acid-Isooctane Method)."

### (Analysis of C6-14 Lactones (Lactones Having 6 to 14 Carbon Atoms))

The content of lactones having 6 to 14 carbon atoms in each sample was determined by gas chromatography-mass spectrometry (GC/MS). The total amount (mass) of lactones having 6 to 14 carbon atoms was defined as total lactones. Note that the analysis conditions are as follows.

### GC/MS conditions

- Column: DB-1HT (15 m×φ0.25 mm×0.1 µm)
- Temperature program: 40°C [3 min] - 4°C/min - 170°C - 25°C/min - 370°C [7 min]
- Carrier gas: helium
- Inlet: 370°C, split ratio=20:1
- Ion source: EI
- Detector: MSD
- Solution concentration: 0.1 mg/mL
- Injection volume: 1 µL
- Analysis method: quantification (ppm) using a C6-C14 lactone standard solution as an external standard

**Table 1**

| Sample | Oxidative Heating Step | Heating Step | POV | Lactone (ppm) | | | | |
|---|---|---|---|---|---|---|---|---|
| | | | | γ-C8 | γ-C10 | δ-C8 | δ-C10 | Total Lactones |
| 1-1 | - | - | 0.0 | 0.0 | 0.0 | 0.0 | 0.0 | 0.0 |
| 1-1-1 | 1 (180°C, 60 min) | - | 35.4 | 166.6 | 199.2 | 58.0 | 69.7 | 493.5 |
| 1-1-2 | 1 (180°C, 60 min) | 1 (200°C, 5 min) | 33.8 | 186.9 | 229.8 | 65.0 | 80.2 | 561.9 |
| 1-1-3 | 1 (180°C, 60 min) | 1 (200°C, 5 min) | 17.6 | 238.0 | 285.2 | 80.4 | 100.9 | 704.5 |
| 1-1-4 | 1 (180°C, 60 min) | 1 (200°C, 5 min) | 15.8 | 259.3 | 312.5 | 85.2 | 108.4 | 765.5 |
| 1-1-5 | 1 (180°C, 60 min) | 1 (200°C, 5 min) | 7.7 | 285.9 | 347.9 | 93.9 | 120.4 | 848.2 |
| 1-1-6 | 1 (180°C, 60 min) | (200°C, 5 min) | 2.6 | 317.4 | 402.3 | 104.6 | 137.1 | 961.3 |
| 1-2 | - | - | 0.0 | 0.0 | 0.0 | 0.0 | 0.0 | 0.0 |
| 1-2-1 | 1 (180°C, 60 min) | - | 43.9 | 178.8 | | 166.7 | | 345.4 |
| 1-2-2 | 1 (180°C, 60 min) | 2 (180°C, 5 min) | 40.8 | 200.1 | | 169.2 | | 369.2 |
| 1-2-3 | 1 (180°C, 60 min) | 2 (180°C, 5 min) | 32.5 | 205.9 | | 177.2 | | 383.1 |
| 1-2-4 | 1 (180°C, 60 min) | 2 (180°C, 5 min) | 30.7 | 248.9 | | 215.0 | | 463.8 |
| 1-2-5 | 1 (180°C, 60 min) | 2 (180°C, 5 min) | 27.4 | 309.4 | | 270.2 | | 579.6 |
| 1-2-6 | 1 (180°C, 60 min) | 2 (180°C, 5 min) | 17.7 | 378.8 | | 378.8 | | 757.6 |
| 1-2-7 | 1 (180°C, 60 min) | 2 (180°C, 5 min) | 7.5 | 466.2 | | 518.0 | | 984.1 |
| 1-2-8 | 1 (180°C, 60 min) | 2 (180°C, 5 min) | 3.0 | 515.6 | | 612.3 | | 1127.9 |

| | | | | | | | | |
|---|---|---|---|---|---|---|---|---|
| *: γ-C8: γ-lactone having 8 carbon atoms, γ-C10: γ-lactone having 10 carbon atoms, δ-C8: δ-lactone having 8 carbon atoms, δ-C10: δ-lactone having 10 carbon atoms | | | | | | | | |

As shown in Table 1, Samples 1-1-2 to 6 and Samples 1-2-2 to 8 that have undergone the heating step have an increased amount of lactones compared to Samples 1-1-1 and 1-2-1, which have only undergone the oxidative heating step.

### <Reference Examples>

The following are studies on the distillation step and mixing step for hardening. None of them underwent the heating step, but they show that rancid odor can be suppressed by adjusting linear alkanes having 7 to 9 carbon atoms and/or linear alkanes having 9 carbon atoms in the flavor-imparting agent to 130 mass ppm or less in the distillation step and mixing step.

### [Samples 2-1 to 6]

As described below, refined fully hydrogenated coconut oil (Sample 2-1) was subjected to oxidative heating step 1, oxidative heating step 2, distillation step 1, and distillation step 2 as appropriate to obtain Samples 2-2 to 6. Samples 2-1 to 6 were analyzed and evaluated for odor (flavor), and the results are shown in Table 2.

### (Sample 2-1: Raw Material Oil and/or Fat)

Refined, fully hydrogenated coconut oil (manufactured by Nisshin Oillio Group, Ltd.) was used as Sample 2-1.

Note that the mass percentages of the constituent fatty acids of the refined, fully hydrogenated coconut oil are as follows.
Caprylic acid (8 carbon atoms) 8.0%
Capric acid (10 carbon atoms) 6.1%
Lauric acid (12 carbon atoms) 45.6%
Myristic acid (14 carbon atoms) 18.7%
Palmitic acid (16 carbon atoms) 9.6%
Stearic acid (18 carbon atoms) 11.8%
Other fatty acids 0.2%

### (Oxidative Heating Step 2)

The raw material oil and/or fat was heated (200°C, 60 minutes) in a pressurized reaction apparatus (Portable Reactor TPR-1 type/Taiatsu Techno Corporation) filled with oxygen gas. Note that during heating, the oxygen gas was adjusted so that the internal pressure of the apparatus was 0.9 MPa. Heating was stopped 60 minutes after the temperature of the sample reached 200°C, and the sample was cooled to obtain a sample that had undergone oxidative heating step 2.

### (Oxidative Heating Step 3)

50 g of the raw material oil and/or fat was heated (190°C, 1 hour) in a beaker (200 mL) to obtain a sample that had undergone oxidative heating step 3. Note that the heating was performed under atmospheric pressure.

### (Distillation Step 1)

An oil and/or fat (sample) was subjected to vacuum steam distillation under conditions of a distillation temperature of 170°C, a pressure of 2000 Pa (15 Torr), a steam amount (relative to the oil and/or fat) of 1% by mass, and a distillation time of 1 hour to obtain a sample that had undergone distillation step 1.

### (Distillation Step 2)

An oil and/or fat (sample) was subjected to vacuum steam distillation under conditions of a distillation temperature of 245°C, a pressure of 400 Pa (3 Torr), a steam amount (relative to the oil and/or fat) of 3% by mass, and a distillation time of 1 hour to obtain a sample that had undergone distillation step 2.

### (Sample 2-2)

Refined, fully hydrogenated coconut oil (Sample 2-1) was used as a raw material and subjected to oxidative heating step 2 to obtain Sample 2-2.

### (Sample 2-3)

Sample 2-2 was subjected to distillation step 1 to obtain Sample 2-3.

### (Sample 2-4)

Refined, fully hydrogenated coconut oil (Sample 2-1) was used as a raw material and subjected to oxidative heating step 3 to obtain Sample 2-4.

### (Sample 2-5)

Sample 2-2 was used as a raw material and subjected to distillation step 2 to obtain Sample 2-5.

### (Sample 2-6)

Refined, fully hydrogenated coconut oil (Sample 2-1) was used as a raw material and subjected to oxidative heating step 2, distillation step 1, oxidative heating step 2, distillation step 1, oxidative heating step 2, distillation step 1, oxidative heating step 2, and distillation step 1 in this order, that is, oxidative heating step 2 and distillation step 1 were each performed four times, to obtain Sample 2-6.

### [Analysis]

### (Peroxide Value: POV)

The peroxide value (POV) of each sample was measured according to Standard Methods for the Analysis of Fats, Oils and Related Materials (edited by the Japan Oil Chemists' Society) 2.5.2.1-2013 "Peroxide Value (Acetic Acid-Isooctane Method)."

### (Anisidine Value: AnV)

The anisidine value (AnV) of each sample was measured according to Standard Methods for the Analysis of Fats, Oils and Related Materials (edited by the Japan Oil Chemists' Society) 2.5.3-2013 "Anisidine Value."

### (Analysis of C6-14 Lactones (Lactones Having 6 to 14 Carbon Atoms))

The content of lactones having 6 to 14 carbon atoms in each sample was determined by gas chromatography-mass spectrometry (GC/MS). The total amount (mass) of lactones having 6 to 14 carbon atoms was defined as total lactones. Note that the analysis conditions are as follows.

### GC/MS conditions

- Column: DB-1HT (15 m×φ0.25 mm×0.1 µm)
- Temperature program: 40°C [3 min] - 4°C/min - 170°C - 25°C/min - 370°C [7 min]
- Carrier gas: helium
- Inlet: 370°C, split ratio=20:1
- Ion source: EI
- Detector: MSD
- Solution concentration: 0.1 mg/mL
- Injection volume: 1 µL
- Analysis method: quantification (ppm) using a C6-C16 lactone standard solution as an external standard

### (Linear Alkanes Having 9 and 17 Carbon Atoms: C9 Alkane, C17 Alkane)

The content of linear alkanes having 9 and 17 carbon atoms in each sample was determined by gas chromatography-mass spectrometry (GC/MS). Note that the analysis conditions are as follows.

### GC/MS conditions

- Column: DB-1HT (15 m×φ0.25 mm×0.1 µm)
- Temperature program: 40°C [3 min] - 4°C/min - 170°C - 25°C/min - 370°C [7 min]
- Carrier gas: helium
- Inlet: 370°C, split ratio=20:1
- Ion source: EI
- Detector: MSD
- Solution concentration: 0.1 mg/mL
- Injection volume: 1 µL
- Analysis method: quantification (ppm) using a C6-C18 alkane standard solution as an external standard

### (Milky Aroma)

Each sample was heated at 50°C, and 10 expert panelists evaluated the aroma (milky aroma) on a scale of 0 to 4. As a standard for milky aroma, it was explained that the smell of cow's milk or a smell close to it should be recognized as "milky aroma," and since there was a common understanding among the panelists that Samples 2-1, 2-4, and 2-3 had a strong milky aroma in this order, these samples were used as standards, and the evaluation was performed with the following scores. The average values of the panelists are shown in Tables 2 and 3. Note that a higher value indicates a stronger milky aroma, which is preferable.
0 points: No milky aroma (same level as Sample 2-1)
1 point: Milky aroma is perceived (intermediate level between Sample 2-1 and Sample 2-4)
2 points: Milky aroma is perceived (same level as Sample 2-4)
3 points: Milky aroma is perceived as slightly strong (intermediate level between Sample 2-4 and Sample 2-3)
4 points: Milky aroma is perceived as strong (same level as Sample 2-3, or stronger than Sample 2-3)

Here, scores of 1.5 points or more were rated as excellent (⊚), 0.6 points or more and less than 1.5 points as good (○), and 0 to less than 0.6 points as unacceptable (×).

### (Rancid Odor (Oxidative Deterioration Odor))

Each sample was evaluated based on Sample 2-1, which has no rancid odor, and Sample 2-2, which has rancid odor. Each sample was heated to 50°C, and 10 expert panelists evaluated the aroma (rancid odor) on a scale of 0 to 2. The panelists were selected from those who had a good understanding of general rancid odor of oils and/or fats. The average values of the panelists are shown in Tables 2 and 3. Note that a higher value indicates stronger rancid odor, which is undesirable.
0 points: No rancid odor (same level as Sample 2-1)
1 point: Rancid odor is perceived, but within an acceptable range.
2 points: Rancid odor is perceived and unsuitable for taste (same level as Sample 2-2, or worse than Sample 2-2)

Here, 0 to 1.0 points or less were rated as good (○), more than 1.0 to 1.5 points or less as acceptable (△), and more than 1.5 points as unacceptable (×).

**Table 2**

| | Oxidative Heating Step | Distillation Step | POV | AnV | Total Lactones (ppm) | C9 Alkane (ppm) | C17 Alkane (ppm) | Milky Aroma | Rancid Odor |
|---|---|---|---|---|---|---|---|---|---|
| Sample 2-1 | - | - | 0.1 | 0.0 | 0.0 | 0.0 | 0.0 | 0.0 (×) | 0.0 (○) |
| Sample 2-2 | Oxidative Heating Step 2 | - | 24.1 | 9.2 | 4269.1 | 230.7 | 210.5 | 2.4 (⊚) | 2.0 (×) |
| Sample 2-3 | Oxidative Heating Step 2 | Distillation Step 1 | 0.4 | 7.5 | 2184.7 | 7.1 | 90.7 | 4.0 (⊚) | 0.0 (○) |
| Sample 2-4 | Oxidative Heating Step 3 | - | 18.3 | 3.8 | 245.0 | 24.8 | 38.6 | 2.0 (⊚) | 0.3 (○) |
| Sample 2-5 | Oxidative Heating Step 2 | Distillation Step 2 | 0.0 | 6.1 | 0.0 | 0.0 | 0.0 | 0.0 (×) | 0.0 (○) |
| Sample 2-6 | Oxidative Heating Step 2, 4 Times | Distillation Step 1, 4 Times | 0.4 | 24.2 | 6103.6 | 0.0 | 122.5 | 4.0 (⊚) | 0.0 (○) |

| | | | | | | | | | |
|---|---|---|---|---|---|---|---|---|---|
| * C9 alkane: linear alkane having 9 carbon atoms, C17 alkane: linear alkane having 17 carbon atoms | | | | | | | | | |

In untreated Sample 2-1 and Sample 2-5 that has undergone distillation step 2, neither lactones nor alkanes were confirmed, and there was no milky aroma. Sample 2-2, which has a high content of linear alkanes having 9 carbon atoms, had rancid odor, while Sample 2-1 and Samples 2 to 6, which have a low content of the same alkanes, had no or little rancid odor. Sample 2-3, which was obtained by distilling Sample 2-2, had a stronger milky aroma despite having a smaller amount of lactones than Sample 2-2. It is predicted that rancid odor (or alkanes) interferes with the development of milky aroma. Note that the lactones present were only those having the number of carbon atoms corresponding to the number of carbon atoms of the constituent fatty acids of the raw material oil and/or fat.

### [Samples 2-7 to 16 (Mixing Step)]

The samples listed in the blended samples in Table 3 were mixed at a mass ratio of 1:1 (dissolved and mixed at 60°C, under atmospheric pressure) to obtain Samples 2-7 to 16. Similar to Samples 2-1 to 6, Samples 2-7 to 16 were analyzed and evaluated for flavor, and the results are shown in Table 3.

**Table 3**

| | Blended Sample | POV | AnV | Total Lactones (ppm) | C9 Alkane (ppm) | C17 Alkane (ppm) | Milky Aroma | Rancid Odor |
|---|---|---|---|---|---|---|---|---|
| Sample 2-7 | Sample 2-1, Sample 2-2 | 12.1 | 4.6 | 2134.6 | 115.4 | 105.3 | 1.6 (⊚) | **1.4** (△) |
| Sample 2-8 | Sample 2-1, Sample 2-7 | 6.1 | 2.3 | 1067.5 | 57.7 | 52.6 | 0.9 (○) | 0.9 (○) |
| Sample 2-9 | Sample 2-2, Sample 2-7 | 18.1 | 6.9 | 3202.0 | 173.0 | 157.9 | 1.9 (⊚) | 1.8 (×) |
| Sample 2-10 | Sample 2-2, Sample 2-4 | 21.2 | 6.5 | 2257.2 | 127.8 | 124.6 | 2.6 (⊚) | 1.1 (△) |
| Sample 2-11 | Sample 2-1, Sample 2-4 | 0.3 | 3.8 | 1092.5 | 3.6 | 45.4 | 3.1 (⊚) | 0.0 (○) |
| Sample 2-12 | Sample 2-3, Sample 2-7 | 6.3 | 6.1 | 2159.9 | 61.2 | 98.0 | 3.1 (⊚) | 0.9 (○) |
| Sample 2-13 | Sample 2-1, Sample 2-4 | 9.2 | 1.9 | 122.7 | 12.4 | 19.3 | 0.7 (○) | 0.1 (○) |
| Sample 2-14 | Sample 2-2, Sample 2-3 | 12.3 | 8.4 | 3227.1 | 118.9 | 150.6 | 1.8 (⊚) | **1.4** (△) |
| Sample 2-15 | Sample 2-3, Sample 2-4 | 9.4 | 5.7 | 1215.1 | 16.0 | 64.7 | 4.0 (⊚) | 0.2 (○) |
| Sample 2-16 | Sample 2-1, Sample 2-6 | 0.3 | 12.1 | 3052.1 | 0.0 | 61.3 | 2.0 (⊚) | 0.0 (○) |

| | | | | | | | | |
|---|---|---|---|---|---|---|---|---|
| * C9 alkane: linear alkane having 9 carbon atoms, C17 alkane: linear alkane having 17 carbon atoms | | | | | | | | |

As shown in Table 3, among Samples 2-7 to 16, Samples 2-7 to 16 containing 5 mass ppm or more of lactones having 6 to 14 carbon atoms (total lactones) had a milky aroma, while it was confirmed that rancid odor was suppressed when the linear alkanes having 9 carbon atoms in Samples 2-7 to 16 were 130 mass ppm or less (except for Sample 2-9).

## Claims

1. A method for producing a flavor-imparting agent containing 5 mass ppm or more of lactone having 6 to 14 carbon atoms, comprising
an oxidative heating step of oxidatively heat-treating a raw material oil and/or fat at 140°C or higher to generate lactone-containing oil and/or fat containing lactone having 6 to 14 carbon atoms; and
a heating step of heat-treating the lactone-containing oil and/or fat obtained in the oxidative heating step at 80°C or higher, wherein
in conditions of the heating step, an oxygen supply amount is smaller than an oxygen supply amount in the oxidative heating step,
4 to 100% by mass of constituent fatty acids of the raw material oil and/or fat are linear saturated fatty acids having 6 to 14 carbon atoms, and
the lactone is γ-lactone and/or δ-lactone.

2. The method for producing a flavor-imparting agent according to claim 1, wherein the heating step is performed without supplying oxygen or in an oxygen-free state.

3. The method for producing a flavor-imparting agent according to claim 1 or 2, wherein the raw material oil and/or fat is an oil and/or fat having a content of linear unsaturated fatty acids of 0 to 60% by mass in the constituent fatty acids of the oil and/or fat.

4. The method for producing a flavor-imparting agent according to any one of claims 1 to 3, wherein the flavor-imparting agent contains 50% by mass or more of triglycerides.

5. The method for producing a flavor-imparting agent according to any one of claims 1 to 4, wherein the flavor-imparting agent contains 130 mass ppm or less of linear alkanes having 9 carbon atoms.

6. The method for producing a flavor-imparting agent according to any one of claims 1 to 4, wherein the flavor-imparting agent contains 130 mass ppm or less of linear alkanes having 7 to 9 carbon atoms.

7. The method for producing a flavor-imparting agent according to any one of claims 1 to 6, wherein after the heating step, a distillation step, or a mixing step, or a distillation step and a subsequent mixing step, or a mixing step and a subsequent distillation step is performed such that the linear alkanes having 7 to 9 carbon atoms in the flavor-imparting agent are 130 mass ppm or less.
Distillation step: a step of distilling under conditions where the linear alkanes having 7 to 9 carbon atoms in the oil and/or fat are reduced, but the lactone having 6 to 14 carbon atoms in the oil and/or fat remain at 5 mass ppm or more.
Mixing step: a step of mixing the oil and/or fat after the heating step or the oil and/or fat after the distillation step with an oil and/or fat having a smaller amount of linear alkanes having 7 to 9 carbon atoms.

8. The method for producing a flavor-imparting agent according to claim 7, wherein the distillation in the distillation step is performed at 200°C or lower, 200 Pa or higher, and within 60 minutes.

9. The method for producing a flavor-imparting agent according to claim 7 or 8, wherein the mixing in the mixing step includes mixing the oil and/or fat after the heating step or the distillation step with an oil and/or fat that has not undergone an oxidative heating step.

10. A flavor-imparting agent for imparting flavor to oil and/or fat, comprising
5 mass ppm or more of lactone having 6 to 14 carbon atoms and 130 mass ppm or less of linear alkanes having 9 carbon atoms, wherein
the lactone having 6 to 14 carbon atoms is γ-lactone and/or δ-lactone, and
the oil and/or fat is an oil and/or fat having a content of linear saturated fatty acids having 6 to 14 carbon atoms of 4 to 100% by mass in constituent fatty acids of the oil and/or fat.

11. The flavor-imparting agent according to claim 10, further comprising 50% by mass or more of triglycerides.

12. The method for producing a flavor-imparting agent according to claim 10 or 11, wherein the flavor-imparting agent contains 130 mass ppm or less of linear alkanes having 7 to 9 carbon atoms.
